# EUROPEAN PATENT APPLICATION

(11) **EP 4 685 919 A1**
(43) Date of publication of application: **28.01.2026**
(21) Application number: 24773887.5
(22) Date of filing: 29.02.2024
(51) Int. Cl.: H01M 10/44

(54) **INITIAL CHARGING AND CAPACITY VERIFICATION METHOD FOR LITHIUM-ION BATTERY CONTAINING POSITIVE ELECTRODE LITHIUM SUPPLEMENTATION ADDITIVE**

(30) Priority: 21.03.2023 CN 202310305049
(71) Applicant: REPT BATTERO Energy Co., Ltd., Wenzhou, Zhejiang 325000 (CN); Shanghai Ruipu Energy Co., Ltd., Shanghai 201206 (CN)
(72) Inventor: CAO, Hui, Wenzhou, Zhejiang 325000 (CN); SUN, Yuwei, Wenzhou, Zhejiang 325000 (CN); HOU, Min, Shanghai 201206 (CN); LIAN, Shuang, Wenzhou, Zhejiang 325000 (CN); ZHENG, Yinkun, Wenzhou, Zhejiang 325000 (CN); LIU, Chan, Shanghai 201206 (CN); YU, Zhaoyu, Wenzhou, Zhejiang 325000 (CN); LIU, Jianyong, Wenzhou, Zhejiang 325000 (CN)
(74) Representative: Nederlandsch Octrooibureau
(86) International application number: PCT/CN2024/079400
(87) International publication number: WO 2024/193319

(57) **Abstract**

The present invention relates to an initial charging and capacity verification method for a lithium-ion battery containing a positive electrode lithium supplementation additive. A positive pole piece of the utilized lithium-ion battery comprises a positive electrode current collector and a positive electrode film layer arranged on at least one surface of the positive electrode current collector, the positive electrode film layer comprising a positive electrode active material; the positive electrode active material comprises a lithium transition metal oxide and a lithium supplementation additive; the present invention sets a lithium supplementation additive initial deintercalation low percentage interval gram capacity average voltage to be V1, an initial deintercalation high percentage interval gram capacity average voltage to be V2, and the maximum operating voltage of the lithium transition metal oxide to be V3; with regard to the delithiation characteristics of the positive electrode lithium supplementation additive, the invention customizes an initial charging and capacity verification process suited to the battery containing the positive electrode lithium supplementation additive, thereby avoiding an influence on the stability of other chemical elements in an electrolyte when the lithium supplementation additive and the transition metal oxide are simultaneously delithiated under a high voltage; and ensuring the complete delithiation of the lithium ions in the positive electrode lithium supplementation additive, thereby improving the energy density of the battery, and increasing cycle life.

## Description

### Technical Field

The present invention relates to a new energy technical field, specifically an initial charging and capacity verification method for lithium-ion battery containing positive electrode lithium supplementation additive.

### Background Technology

Due to the rapid development of technologies such as electric vehicles and electronic devices, the demand for high-energy density lithium-ion batteries is constantly increasing. As one of the important measures to improve battery energy density, the application of high specific capacity anode materials has also received increasing attention. However, compared with traditional graphite based materials, high specific capacity anode materials have larger initial irreversible capacity and lower cycling stability, which seriously affects the energy density and service life of batteries. For the practical application of high specific capacity anodes, there is an urgent need to develop commercially available prelithiation technology to compensate for the irreversible capacity loss during the initial and cycling processes.

At present, the mainstream prelithiation directions are mainly divided into two types: anode prelithiation and cathode prelithiation. Anode prelithiation is mainly achieved by adding lithium foil or lithium powder to the anode. However, due to the extremely active nature of lithium, there are high processing safety risks, high costs, and difficulty in large-scale commercial use. Cathode prelithiation is mainly achieved by adding positive electrode lithium supplementation additives during the stirring process of the cathode slurry. By utilizing the high initial lithium removal and low initial lithium insertion of the lithium replenishment additives, excess lithium ions are released from the cathode during the first charge of the battery, and there is no significant increase in cathode lithium insertion vacancies during the first discharge, thus achieving the effect of supplementing lithium ions in the entire battery. Positive electrode lithium supplementation additiveation requires low processing technology, low equipment requirements, low safety risks, and is easier to mass produce. The currently mature positive electrode lithium supplementation additives are Li₅FeO₄ and Li₂NiO₂, which are used in both lithium iron phosphate batteries and ternary batteries. However, when the conventional methods of initial charging and capacity verification are applied to batteries containing cathode lithium additives, there may be insufficient lithium removal by the lithium additives, resulting in lithium deposition in the battery cells. Additionally, the voltage range for the large amount of lithium removal by the lithium additives overlaps with the voltage range for the large amount of lithium removal by the transition metal oxides, leading to simultaneous lithium removal by the lithium additives and transition metal oxides at high voltages, which affects the stability of other chemical elements in the electrolyte.

### Summary of the Invention

The purpose of the present invention is to provide an initial charging and capacity verification method for lithium-ion battery containing positive electrode lithium supplementation additive, in response to the problems existing in the prior art. The present invention proposes an initial charging and capacity verification process suitable for batteries containing positive electrode lithium supplementation additives for lithium iron phosphate, lithium cobalt oxide, and ternary battery systems, ensuring that the positive electrode lithium supplementation additives can fully remove lithium ions and do not damage the stability of other chemical elements in the entire battery chemical system during the lithium removal process, thereby ensuring the cycling stability and storage stability of the entire battery.

The objective of the present invention can be achieved through the following embodiments:
The present invention provides an initial charging and capacity verification method for lithium-ion battery containing positive electrode lithium supplementation additive, comprising the following steps:
S1. Assemble the anode, electrolyte, and cathode into a lithium-ion battery; The cathode comprises a cathode current collector and a cathode film layer disposed on at least one surface of the cathode current collector, wherein the cathode film layer comprises a cathode active material; The cathode active material includes lithium transition metal oxide and lithium replenishment additive;
S2. Conduct initial charging lithium-ion batteries;
S3. The average voltage for the delithiation of lithium additive from the low percentage range is V₁, the average voltage for the delithiation of lithium additive from the high percentage range is V₂, and the maximum operating voltage for lithium transition metal oxide is V₃;
S4. Determine whether V₃ is less than 4V and perform the charge process as follows:
   (1) If V₃ is less than 4V, charge the lithium-ion battery according to the following steps:
      ① Charge at a constant rate of 0.1-0.4C to 3.7-3.9V, then maintain a constant voltage until the current is 0.01-0.1C, and rest 3-30 minutes;
      ② Charge at a constant rate of 0.1-0.4C to V₂ ± 0.1V, then maintain a constant voltage until the current is 0.01-0.1C, and rest 3-30 minutes;
      ③ Charge at a constant rate of 0.01-0.1C to 4.1 ±0.1V and rest 3-30 minutes; Then the charge process ends;
   (2) If V₃ is greater than or equal to 4V, charge and discharge the lithium-ion battery according to the following steps:
      ① Charge at a constant rate of 0.1-0.4C to V₂ ± 0.1V, then maintain a constant voltage until the current is 0.01-0.1C, and rest 3-30 minutes;
      ② Discharge at a constant rate of 0.1-0.5C until V₁±0.1V, and rest 3-30 minutes;
      ③ Repeat steps ① and ②, and charge and discharge 2-5 times; The more repetitions, the deeper the delithiation of the lithium additive, but the longer the charging time, usually 2 repetitions are sufficient;
      ④ Charge at a constant rate of 0.1-0.5C to V3±0.1V and rest 3-30 minutes; Then the charge and discharge process ends.

The main purpose is to thoroughly delithiate the lithium replenishment additive during lower voltage range, and avoid the chemical reaction of the delithiating lithium replenishment additive with the additives in electrolyte during high voltage range. After adopting this charge and discharge process, the lithium additive can fully remove lithium ions, while the electrolyte remains stable. The transition metal oxide can also fully remove lithium ions, and the anode can fully embed the lithium ions removed from the cathode, without lithium deposition in the battery. When the conventional capacity verification process is used for batteries containing lithium replenishment additives, it can lead to insufficient lithium removal from the replenishment additives, resulting in lithium deposition in the battery cells. Conventional batteries without lithium additives will not have any negative effects when using the above capacity verification process, except for increasing the capacity verification time.

As an embodiment of the present invention, in step S1, the lithium transition metal oxide comprises one or more of LiCoO₂, LiFePO₄, LiₓNi_{y}M_{1-y}O₂; Among them, 0.9≤x≤1.2, 0.5≤y<1, M includes one or more of Co, Mn, Al, Mg, Ti, Fe, Cr, Mo, Ca.

As an embodiment of the present invention, in step S1, the lithium replenishment additive comprises Li₆CoO₄, Li₂NiO₂, Li₅FeO₄, Li₂O, Li₃N and one or more of their respective modified materials; The modification refers to coating modification and/or doping modification. The proportion of the mass of lithium replenishment additives to the mass of the cathode active material is 0.5-15%, preferably 1-5%.

As an embodiment of the present invention, the initial charging capacity of the lithium replenishment additive is 260-3000 mAh/g, preferably 400-3000 mAh/g. The larger the initial charging capacity of lithium additives, the more significant the improvement in energy density. The irreversible capacity of the lithium replenishment additive is 250-3000 mAh/g, preferably 400-3000 mAh/g. The larger the irreversible capacity of lithium replenishment additives, the more they can improve the cycle life.

In the secondary battery of the present invention, the cathode active material can be a cathode active material commonly known in the art for secondary batteries. Optionally, the cathode active material can be selected from one or more of lithium transition metal oxides and their respective modified materials. The surface of the cathode film layer is set to have two opposing surfaces in the thickness direction of the cathode current collector. The cathode film layer can be set on either of the two surfaces or on both surfaces separately.

As an embodiment of the present invention, in step S1, the lithium-ion battery comprises one of a pouch battery, a square battery, or a cylindrical battery. Pouch batteries are formed and sorted at a pressure of 0.1-0.4MPa, while square and cylindrical batteries are formed and sorted at a negative pressure of -65 to -75KPa. Specifically, after the pouch battery is filled with electrolyte and left to settle, it is subjected to the following prescribed process of initial charging and capacity verification under a pressure of 0.1-0.4MPa throughout the entire process, followed by air extraction to complete the battery cell production. Square or cylindrical batteries are subjected to negative pressure ranging from -65 to -75KPa and undergo initial charging and capacity verification according to the following prescribed process to complete the battery cell production.

As an embodiment of the present invention, the specific steps of initial charging in step S2 are:
S2-1. Charge at a constant rate of 0.01-0.2C for 40-80 minutes, with a cut-off voltage of 3V±0.1V. When the charging time reaches 40-80 minutes or the cut-off voltage reaches 3V ± 0.1V, jump to the next step;
S2-2. Charge at a constant rate of 0.05-0.3C for 40-80 minutes, with a cut-off voltage of 3.4V±0.1V. When the charging time reaches 40-80 minutes or the cut-off voltage reaches 3.4V ± 0.1V, jump to the next step;
S2-33. Charge at a constant rate of 0.1-0.5C for 40-80 minutes, with a cut-off voltage of 3.7V±0.1V. When the charging time reaches 40-80 minutes or the cut-off voltage reaches 3.7V ± 0.1V, jump to the next step.

In step S3, the lower limit of the low percentage range is not less than 5%, and the upper limit is not more than 30%; The lower limit of the high percentage range is not less than 50%, and the upper limit is not more than 90%. The low percentage range is preferred to be 5%-30%, and the high percentage range is preferred to be 50%-90%. That is, the average voltage at which the lithium replenishment additive first releases 5%-30% of its capacity is V₁, and the average voltage at which it first releases 50%-90% of its capacity is V₂. In the present invention, the "capacity per gram" in the "first extraction of low percentage range capacity per gram" and "first extraction of high percentage range capacity per gram" refers to the first lithium extraction capacity per gram of the lithium replenishment additive.

As an embodiment of the present invention, in step S3, the low percentage range is 5%-30%, and the high percentage range is 50%-90%.

In the present invention, the average voltage capacity per gram of the lithium replenishment additive when it first exits a certain percentage range can be determined by the following method: adding the lithium replenishment additive, conductive carbon and polyvinylidene fluoride (PVDF) were added to N-methylpyrrolidone (NMP) in a mass ratio of 8:1:1, with a total solid content of 60wt%; Form a slurry by ball milling or stirring, and apply the slurry onto one side of the aluminum foil using a scraping method; After coating, the electrodes are dried and processed into standard electrode sizes for button type batteries using a punching machine (such as circular pieces with a diameter of 12mm), with a surface density set to 300g/m²; Match the produced cathode with the gasket, spring, separator and lithium sheet to be assembled into a button type battery, which is sealed after adding electrolyte. The solvent of the electrolyte is a mixture of ethylene carbonate (EC), methyl ethyl carbonate (EMC), and diethyl carbonate (DEC) in a volume ratio of 3:5:2, and the electrolyte is LiPF₆ with a content of 10wt%; Charge the button type battery with a current of 0.1mA to 4.5V and calculate the actual capacity per gram; The capacity percentage can be determined through normalization processing; The average voltage corresponding to different percentage intervals of capacity per gram can be obtained by dividing the integrated area of the corresponding interval below the capacity voltage curve by the capacity. When the lithium replenishment additive is Li₆CoO₄, the average voltage (V₁) for the first extraction of 5%-30% capacity per gram is 3.5V, and the average voltage (V₂) for the first extraction of 50%-90% capacity per gram is 3.9V.

When Li₂NiO₂ is used as a lithium replenishment additive, the average voltage (V₁) for the first extraction of 5%-30% capacity per gram is 3.5V, and the average voltage (V₂) for the first extraction of 50%-90% capacity per gram is 4.0V.

When the lithium replenishment additive is Li₅FeO₄, the average voltage (V₁) for the first extraction of 5%-30% capacity per gram is 3.6V, and the average voltage (V₂) for the first extraction of 50%-90% capacity per gram is 3.9V.

When the lithium replenishment additive is Li₂O, the average voltage (V₁) for the first extraction of 5%-30% capacity per gram is 2.3V, and the average voltage (V₂) for the first extraction of 50%-90% capacity per gram is 3.8V.

When the lithium replenishment additive is Li₃N, the average voltage (V₁) for the first extraction of 5%-30% capacity per gram is 3.8V, and the average voltage (V₂) for the first extraction of 50%-90% capacity per gram is 4.1V.

In the present invention, the maximum operating voltage of lithium transition metal oxide can be determined by the following method: adding lithium transition metal oxide, conductive carbon, and PVDF to NMP in a mass ratio of 8:1:1, with a total solid content set to 60wt%; Form a slurry by ball milling or stirring, and apply the slurry onto one side of the aluminum foil using a scraping method; After coating, the electrodes are dried and processed into standard electrode sizes for button type batteries using a punching machine (such as circular pieces with a diameter of 12mm), with a surface density set to 300g/m²; Assemble the prepared cathode with gasket, spring, separator, and lithium sheet into a button type battery, seal it after adding electrolyte, and the solvent of the electrolyte is a mixed solvent of EC, EMC, and DEC with a volume ratio of 3:5:2. The electrolyte is LiPF₆, and the content of electrolyte is 10wt%; Charge the button type battery with a current of 0.1mA to 5.0V and calculate the actual capacity per gram; The capacity percentage can be determined through normalization processing; The voltage corresponding to the charging capacity reaching 95% of the actual capacity per gram during the actual charging process is set as the maximum operating voltage of the lithium transition metal oxide.

As an embodiment of the present invention, in step S4, when the transition metal oxide is only lithium iron phosphate LiFePO₄, V₃ is less than 4V; When LiCoO₂ and/or LiₓNi_{y}M_{1-y}O₂ are present in transition metal oxides, V₃ is greater than or equal to 4V, where 0.9≤x≤1.2, 0.5≤y<1, and M includes one or more of Co, Mn, Al, Mg, Ti, Fe, Cr, Mo, and Ca. In some embodiments, the transition metal oxide is LiCoO₂ and/or LiₓNi_{y}M_{1-y}O₂, with V₃ greater than or equal to 4V.

The purpose of step S2 is to form a stable SEI film.

In step S3, "setting the average voltage of the first extraction of the lithium additive from the low percentage range to be V₁, the average voltage of the first extraction from the high percentage range to be V₂, and the maximum operating voltage of the lithium transition metal oxide to be V₃" refers to "recording the average voltage of the first extraction of the lithium additive from the low percentage range to be V₁, the average voltage of the first extraction from the high percentage range to be V₂, and the maximum operating voltage of the lithium transition metal oxide to be V₃".

In step S4, when V₃ is less than 4V, the purpose of the first step of charging in step (1) is to fully remove lithium from lithium transition metal oxides (such as LiFePO₄), the purpose of the second step of charging is to remove most of the lithium ions from the positive electrode lithium supplementation additive in the first stage, and the purpose of the third step of charging is to remove the remaining lithium ions from the positive electrode lithium supplementation additive in the second stage. By distinguishing the second and third steps from the first step, it avoids the reaction between the delithiation products generated by the synchronous delithiation of the positive electrode lithium supplementation additive and the electrolyte when a large amount of lithium transition metal oxide is delithiated, thereby maintaining the internal electrochemical stability of the battery.

In step S4, when V₃ is greater than or equal to 4V, the purpose of the first and second steps of step (2) in V₁-V₂ charging and discharging is to fully delithiate the cathode lithium additive in the V₁-V₂ voltage range, avoiding the delithiation products of the cathode lithium additive at higher voltages from affecting the stability of the electrolyte. The purpose of charging to V₃ is to enable the lithium transition metal oxide to mainly remove lithium ions in the third stage. When V₃ is greater than or equal to 4V, repeating steps ① and ② for 2-5 cycles of charging and discharging refers to repeating steps ① and ② 2-5 times in step (2).

As an embodiment of the present invention, in step S1, the cathode current collector can be made of materials with good conductivity and mechanical strength, such as aluminum foil or carbon coated aluminum foil, but not limited to these.

As an embodiment of the present invention, in step S1, the cathode film layer further comprises a binder and a conductive agent. The adhesive comprises one or more of polyvinylidene fluoride (PVDF), polyvinylidene fluoride tetrafluoroethylene propylene terpolymer, vinylidene fluoride hexafluoropropylene tetrafluoroethylene terpolymer, tetrafluoroethylene hexafluoropropylene copolymer, and fluorinated acrylic resin. The conductive agent may include one or more of superconducting carbon, carbon black (such as Super P, acetylene black, and Ketjen black), carbon dots, carbon nanotubes, graphene, and carbon nanofibers. The cathode film layer is coated with cathode slurry and dried and cold pressed. Cathode slurry is usually formed by dispersing cathode active material, conductive agent, and binder in a solvent and stirring evenly. The solvent includes N-methylpyrrolidone (NMP).

As an embodiment of the present invention, in step S1, the anode comprises an anode current collector and an anode film layer disposed on at least one surface of the anode current collector and comprising an anode active material, wherein the anode active material comprises graphite and optionally further comprises a silicon oxide material. In some embodiments, the anode active material includes graphite and silicon oxide materials.

As an embodiment of the present invention, in step S1, the anode current collector is made of a material with good conductivity and mechanical strength, such as copper foil, but not limited to this.

As an embodiment of the present invention, in step S1, the anode film layer further comprises a binder, a conductive agent, and other optional additives. The conductive agent may include one or more of superconducting carbon, carbon black (such as Super P, acetylene black, and Ketjen black), carbon dots, carbon nanotubes, graphene, and carbon nanofibers. The adhesive may include one or more of styrene butadiene rubber (SBR), water-soluble unsaturated resin SR-1B, polyacrylic acid (PAA), polyvinyl alcohol (PVA), sodium alginate (SA), and carboxymethyl chitosan (CMCS). The other optional additives include thickening agents (such as carboxymethyl cellulose sodium CMC Na) and PTC thermistor materials. The anode film layer is usually coated with anode slurry on the anode current collector, dried, and cold pressed. Anode slurry coating is usually formed by dispersing anode active materials, optional conductive agents, optional binders, optional additives, etc. in a solvent and stirring evenly. The solvent can be N-methylpyrrolidone (NMP) or deionized water.

As an embodiment of the present invention, in step S1, the electrolyte is selected from at least one of solid electrolyte and liquid electrolyte (i.e. electrolyte). In some embodiments, an electrolyte is used, which includes an electrolyte lithium salt and a solvent. The lithium salt can be selected from LiPF6 (lithium hexafluorophosphate), LiBF4 (lithium tetrafluoroborate) LiClO4 (lithium perchlorate) LiAsF6 (lithium hexafluoroarsenate), LiFSI (lithium difluorosulfonylimide), LiTFSI (lithium bis trifluoromethanesulfonimide) LiTFS (lithium trifluoromethanesulfonate) LiDFOB (lithium difluorooxalate borate) LiBOB (lithium oxalate borate) LiPO2F2 (lithium difluorophosphate) One or more of LiDFOP (lithium difluorooxalate phosphate) and LiTFOP (lithium tetrafluorooxalate phosphate). The solvent can be selected from ethylene carbonate (EC), propylene carbonate (PC), methyl ethyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluorinated ethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyl ester (GBL), sulfolane (SF), One or more of dimethyl sulfoxide (MSM), methyl ethyl sulfone (EMS), and diethyl sulfone (ESE). In the secondary battery of the present application, there is no specific limitation on the type of electrolyte, which can be selected according to the needs.

As an embodiment of the present invention, in step S1, the electrolyte further comprises an additive. The additives include anode film-forming additives or cathode film-forming additives, and may also include additives that can improve certain performance of the battery, such as additives that improve battery overcharge performance, additives that improve battery high-temperature performance, and additives that improve battery low-temperature performance.

As an embodiment of the present invention, in step S1, the secondary battery further comprises an isolation film. The isolation film is set between the cathode and anode to provide isolation. The type of isolation film for the secondary battery of the present invention is not particularly limited, and any known porous structure isolation film for secondary batteries can be selected. For example, the isolation film can be selected from one or more of glass fiber film, non-woven fabric film, polyethylene film, polypropylene film, polyvinylidene fluoride film, and multilayer composite film containing one or more of them.

As an embodiment of the present invention, in step S1, the lithium-ion battery further comprises an outer packaging for encapsulating the cathode, anode, and electrolyte. The outer packaging includes one of a hard shell or a soft shell; Hard shells such as hard plastic shells, aluminum shells, steel shells, etc; Soft shells, such as pouch style. The material of the soft shell can be plastic, such as one or more of polypropylene (PP), polybutylene terephthalate (PBT), polybutylene succinate (PBS), etc.

As an embodiment of the present invention, in step S1, the secondary battery can be prepared using methods known in the art. For example, the cathode, isolation film, and anode are wound or laminated to form an electrode assembly, where the isolation film is located between the cathode and the anode to provide isolation; Place the electrode assembly in the outer packaging, inject electrolyte and seal to obtain a secondary battery.

As an embodiment of the present invention, in step S1, the shape of the secondary battery is not particularly limited and can be cylindrical, square, pouch, or any other shape.

Compared with the existing technology, the present invention has the following beneficial effects:
(1) The unique feature of this invention is that it customizes the initial charging and capacity verification process suitable for batteries containing positive electrode lithium supplementation additives based on their lithium removal characteristics. This avoids the reaction between the delithiation products generated by the synchronous delithiation of the positive electrode lithium supplementation additives and the electrolyte during the large-scale delithiation of lithium transition metal oxides, thereby maintaining the internal electrochemical stability of the battery and ensuring the full removal of lithium ions from the positive electrode lithium supplementation additives, improving battery energy density and cycle life.
(2) At the same time, the research of the present invention found that the pouch battery must be fully converted and divided into capacity under a pressure of 0.1-0.4MPa throughout the process. If the pressure is too low or not fully carried out, the oxygen generated by the cathode lithium additive, especially Li₅FeO₄, after lithium removal cannot be discharged, resulting in some oxygen being reabsorbed by the electrode, leading to black spots or lithium deposition on the anode. If the pressure is too high, the cathode and anode will be subjected to too much pressure, which will result in a small porosity of the electrodes, a decrease in the wettability of the electrode electrolyte, and deterioration of the cycle; Square or cylindrical batteries must be subjected to a negative pressure of -65 to -75KPa throughout the entire process according to the following prescribed procedures. If the pressure is too low or not carried out throughout the process, the cathode lithium additive, especially Li₅FeO₄, cannot complete the discharge of oxygen generated after delithiation, resulting in some oxygen being reabsorbed by the electrode, leading to black spots or lithium deposition on the anode. If the pressure is too high, the core structure may be damaged, leading to safety risks such as short circuits.

### Brief Description of Drawings

Other features, objectives, and advantages of the present invention will become more apparent by reading the detailed description of non limiting embodiments with reference to the following figures:
Figure 1 is a disassembled image of the fully charged electrode in Example 1;
Figure 2 is a disassembled image of the fully charged electrode of Comparative Example 1.

### Detailed Description

The present invention will be described in detail below with reference to the accompanying drawings and specific embodiments. The following examples are implemented based on the technical solution of the present invention, providing detailed implementation methods and specific operation processes, which will help those skilled in the art further understand the present invention. It should be pointed out that the scope of protection of the present invention is not limited to the following embodiments, and several adjustments and improvements made under the premise of the concept of the present invention belong to the scope of protection of the present invention.

The electrolyte composition used in the embodiments and comparative examples of the present invention includes 10wt% lithium hexafluorophosphate, 5wt% lithium difluorosulfonylimide, 0.5wt% ethylene carbonate, 0.8wt% lithium difluorophosphate, 8wt% FEC content, and the remaining amount is organic solvent; The organic solvent is obtained by mixing ethylene carbonate, methyl ethyl carbonate, diethyl carbonate, and propylene carbonate in a mass ratio of 20:70:5:5; The cathode current collector is aluminum foil, and the anode current collector is copper foil.

In the embodiments and comparative examples, V₁ is the average voltage at which the lithium replenishment additive first releases 5%-30% of its capacity, and V₂ is the average voltage at which the lithium replenishment additive first releases 50%-90% of its capacity.

The model of silicon oxide material (SiO) used in the embodiments and comparative examples is HESO from Berzelius (Nanjing) Co., Ltd.

### Example 1

This embodiment provides a pouch laminated secondary battery:
The cathode includes the following components with mass fractions: 1.1% Super P (SP)+0.6% Carbon nanotubes (CNT)+1.1% PVDF+1.2% Li₅FeO₄+96% NCM811 (LiNi_{0.8}Co_{0.1}Mn_{0.1}O₂), with a V1 voltage of 3.6V and a V2 voltage of 3.9V for Li5FeO4; The maximum operating voltage V3 of NCM811 is 4.2V;
The anode consists of the following components by mass: 85.7% graphite+9.5% SiO+1.1% SP+3% PAA+0.6% SBR+0.1% single-walled carbon nanotubes (SWCNT);
After the pouch battery is filled with electrolyte and left to stand, it is subjected to the following process of initial charging and capacity verification (S1-S8) under a pressure of 0.3MPa throughout the entire process, followed by air extraction to complete the battery cell production:
   S1, Charge at a constant rate of 0.05C to 3V;
   S2, Charge at a constant rate of 0.1C to 3.4V;
   S3, Charge at a constant rate of 0.2C to 3.7V;
   S4, Charge at a constant rate of 0.3C to 3.9V, then maintain a constant voltage to a current of 0.05C and rest 5 minutes;
   S5, Discharge at a constant rate of 0.3C to 3.6V and rest 5 minutes;
   S6, Charge at a constant rate of 0.3C to 3.9V, then maintain a constant voltage to a current of 0.05C and rest 5 minutes;
   S7, Discharge at a constant rate of 0.3C to 3.6V and rest 5 minutes;
   S8, Charge at a constant rate of 0.3C to 4.2V and rest 5 minutes;
The minimum operating voltage of the battery is 2.8V, and the maximum operating voltage of the battery is 4.2V.

### Example 2

This embodiment provides a square secondary battery:
The cathode includes the following components with mass fractions: 1.1% SP+0.6% CNT+1.1% PVDF+1.2% Li₂NiO₂+96% LiFePO₄, with a V1 voltage of 3.5V and a V2 voltage of 4.0V for Li₂NiO₂; The V3 voltage of LiFePO₄ is 3.65V;
The anode consists of the following components with mass fractions: 85.7% graphite+9.5% SiO+1.1% SP+3% PAA+0.6% SBR+0.1% SWCNT;
After the battery is filled with electrolyte and left to stand, it is subjected to a negative pressure of -70KPa throughout the entire process. The following steps are followed for capacity verification (S1-S6), followed by gas extraction to complete the battery cell production:
   S1, Charge at a constant rate of 0.05C for 60 minutes;
   S2, Charge at a constant rate of 0.1C for 60 minutes;
   S3, Charge at a constant rate of 0.2C for 60 minutes;
   S4, Charge at a constant rate of 0.3C to 3.7V, then maintain a constant voltage to a current of 0.05C and rest 5 minutes;
   S5, Charge at a constant rate of 0.1C to 4.0V, then maintain a constant voltage to a current of 0.05C and rest 5 minutes;
   S6, Charge at a constant rate of 0.03C to 4.1V and rest 5 minutes;
The minimum operating voltage of the battery is 2.0V, and the maximum operating voltage of the battery is 3.65V.

### Example 3

### This embodiment provides a pouch laminated secondary battery

The cathode includes the following components with mass fractions: 1.1% SP+0.6% CNT+1.1% PVDF+1.2% Li₆CoO₄+96% NCM811 (LiNi_{0.8}Co_{0.1}Mn_{0.1}O₂), with a V1 voltage of 3.5V and a V2 voltage of 3.9V for Li₆CoO₄; The V3 voltage of NCM811 is 4.2V.

The anode consists of the following components with mass fractions: 85.7% graphite+9.5% SiO+1.1% SP+3% PAA+0.6% SBR+0.1% SWCNT;
After the pouch battery is filled with electrolyte and left to stand, it is subjected to the following prescribed process of initial charging and capacity verification (S1-S8) under a pressure of 0.1MPa throughout the entire process, and then evacuated to complete the battery cell production:
S1, Charge at a constant rate of 0.05C to 3V;
S2, Charge at a constant rate of 0.1C to 3.4V;
S3, Charge at a constant rate of 0.2C to 3.7V;
S4, Charge at a constant rate of 0.2C to 3.9V, then maintain a constant voltage to a current of 0.05C and rest 5 minutes;
S5, Discharge at a constant rate of 0.3C to 3.5V and rest 5 minutes;
S6, Charge at a constant rate of 0.2C to 3.9V, then maintain a constant voltage to a current of 0.05C and rest 5 minutes;
S7, Discharge at a constant rate of 0.3C to 3.5V and rest 5 minutes;
S8, Charge at a constant rate of 0.3C to 4.2V and rest 5 minutes;

The minimum operating voltage of the battery is 2.8V, and the maximum operating voltage of the battery is 4.2V.

### Example 4

### This embodiment provides a pouch laminated secondary battery

The cathode includes the following components with mass fractions: 1.1% SP+0.6% CNT+1.1% PVDF+1.2% Li₂O+96% NCM811 (LiNi_{0.8}Co_{0.1}Mn_{0.1}O₂), with a V1 voltage of 2.3V and a V2 voltage of 3.8V for Li₂O; The V3 voltage of NCM811 is 4.2V.

The anode consists of the following components with mass fractions: 85.7% graphite+9.5% SiO+1.1% SP+3% PAA+0.6% SBR+0.1% SWCNT;
After the pouch battery is filled with electrolyte and left to stand, it is subjected to the following process of initial charging and capacity verification (S1-S8) under a pressure of 0.3MPa throughout the entire process, followed by air extraction to complete the battery cell production:
S1, Charge at a constant rate of 0.05C to 3V;
S2, Charge at a constant rate of 0.1C to 3.4V;
S3, Charge at a constant rate of 0.2C to 3.7V;
S4, Charge at a constant rate of 0.3C to 3.8V, then maintain a constant voltage to a current of 0.05C and rest 5 minutes;
S5, Discharge at a constant rate of 0.2C to 2.3V and rest 5 minutes;
S6, Charge at a constant rate of 0.3C to 3.8V, then maintain a constant voltage to a current of 0.05C and rest 5 minutes;
S7, Discharge at a constant rate of 0.2C to 2.3V and rest 5 minutes;
S8, Charge at a constant rate of 0.4C to 4.2V and rest 5 minutes;

The minimum operating voltage of the battery is 2.8V, and the maximum operating voltage of the battery is 4.2V.

### Example 5

This embodiment provides a pouch laminated secondary battery:
The cathode includes the following components with mass fractions: 1.1% SP+0.6% CNT+1.1% PVDF+1.2% Li₃N+96% NCM523 (LiNi_{0.5}Co_{0.2}Mn_{0.3}O₂), with a V1 voltage of 3.8V and a V2 voltage of 4.1V for Li₃N; The V3 voltage of NCM523 is 4.35V.
The anode consists of the following components with mass fractions: 85.7% graphite+9.5% SiO+1.1% SP+3% PAA+0.6% SBR+0.1% SWCNT;
After the pouch battery is filled with electrolyte and left to stand, it is subjected to a full pressure of 0.2MPa, and then subjected to the following prescribed process for capacity verification (such as S1-S8), followed by air extraction to complete the battery cell production:
   S1, Charge at a constant rate of 0.05C to 3V;
   S2, Charge at a constant rate of 0.1C to 3.4V;
   S3, Charge at a constant rate of 0.2C to 3.7V;
   S4, Charge at a constant rate of 0.3C to 4.1V, then maintain a constant voltage to a current of 0.05C and rest 5 minutes;
   S5, Discharge at a constant rate of 0.3C to 3.8V and rest 5 minutes;
   S6, Charge at a constant rate of 0.3C to 4.1V, then maintain a constant voltage to a current of 0.05C and rest 5 minutes;
   S7, Discharge at a constant rate of 0.3C to 3.8V and rest 5 minutes;
   S8, Charge at a constant rate of 0.3C to 4.35V and rest 5 minutes;
The minimum operating voltage of the battery is 2.8V, and the maximum operating voltage of the battery is 4.35V.

### Example 6

This embodiment provides a pouch wound secondary battery:
The cathode includes the following components with mass fractions: 1.1% SP+0.6% CNT+1.1% PVDF+1.2% Li₅FeO₄+96% LiCoO₂. The V1 voltage of Li₅FeO₄ is 3.6V, and the V2 voltage is 3.9V; The V3 voltage of LiCoO₂ is 4.4V;
The anode consists of the following components with mass fractions: 85.7% graphite+9.5% SiO+1.1% SP+3% PAA+0.6% SBR+0.1% SWCNT;
After the pouch battery is filled with electrolyte and left to stand, it is subjected to a full pressure of 0.2MPa and then initial charging and capacity verification according to the following prescribed process. After that, it is evacuated to complete the battery cell production:
   S1, Charge at a constant rate of 0.05C to 3V;
   S2, Charge at a constant rate of 0.1C to 3.4V;
   S3, Charge at a constant rate of 0.2C to 3.7V;
   S4, Charge at a constant rate of 0.3C to 3.9V, then maintain a constant voltage to a current of 0.05C and rest 5 minutes;
   S5, Discharge at a constant rate of 0.3C to 3.6V and rest 5 minutes;
   S6, Charge at a constant rate of 0.3C to 3.9V, then maintain a constant voltage to a current of 0.05C and rest 5 minutes;
   S7, Discharge at a constant rate of 0.3C to 3.6V and rest 5 minutes;
   S8, Charge at a constant rate of 0.3C to 4.4V and rest 5 minutes;
The minimum operating voltage of the battery is 2.8V, and the maximum operating voltage of the battery is 4.4V.

### Example 7

This embodiment provides a pouch laminated secondary battery:
The cathode includes the following components with mass fractions: 1.1% SP+0.6% CNT+1.1% PVDF+1.2% Li₅FeO₄+96% LiFePO₄. The V1 voltage of Li₅FeO₄ is 3.6V, and the V2 voltage is 3.9V; The V3 voltage of LiFePO₄ is 3.65V.
The anode includes the following components with mass fractions: 96% graphite+1% SP+1.2% CMC Na+1.8% SBR;
After the pouch battery is filled with electrolyte and left to stand, it is subjected to a full pressure of 0.4MPA and then initial charging and capacity verification according to the following prescribed process. After that, it is evacuated to complete the battery cell production:
   S1, Charge at a constant rate of 0.05C for 60 minutes;
   S2, Charge at a constant rate of 0.1C for 60 minutes;
   S3, Charge at a constant rate of 0.2C for 60 minutes;
   S4, Charge at a constant rate of 0.3C to 3.8V, then maintain a constant voltage to a current of 0.05C and rest 5 minutes;
   S5, Charge at a constant rate of 0.1C to 3.9V, then maintain a constant voltage to a current of 0.05C and rest 5 minutes;
   S6, Charge at a constant rate of 0.03C to 4.1V and rest 5 minutes;
The minimum operating voltage of the battery is 2.0V, and the maximum operating voltage of the battery is 3.65V.

### Comparative Example 1

This comparative example provides a pouch laminated secondary battery:
The cathode includes the following components with mass fractions: 1.1% SP+0.6% CNT+1.1% PVDF+1.2% Li₅FeO₄+96% NCM811 (LiNi_{0.8}Co_{0.1}Mn_{0.1}O₂), with a V1 voltage of 3.6V and a V2 voltage of 3.9V for Li₅FeO₄; The V3 voltage of NCM811 is 4.2V;
The anode consists of the following components with mass fractions: 85.7% graphite+9.5% SiO+1.1% SP+3% PAA+0.6% SBR+0.1% SWCNT;
After the pouch battery is filled with electrolyte and left to stand, it is subjected to a full process of 0.05MPa pressure, followed by the following prescribed process for initial charging and capacity verification, and then evacuated to complete the battery cell production:
   S1, Charge at a constant rate of 0.05C to 3V;
   S2, Charge at a constant rate of 0.1C to 3.4V;
   S3, Charge at a constant rate of 0.2C to 3.7V;
   S4, Charge at a constant rate of 0.3C to 3.9V, then maintain a constant voltage to a current of 0.05C and rest 5 minutes;
   S5, Discharge at a constant rate of 0.3C to 3.6V and rest 5 minutes;
   S6, Charge at a constant rate of 0.3C to 3.9V, then maintain a constant voltage to a current of 0.05C and rest 5 minutes;
   S7, Discharge at a constant rate of 0.3C to 3.6V and rest 5 minutes;
   S8, Charge at a constant rate of 0.3C to 4.2V and rest 5 minutes;
The minimum operating voltage of the battery is 2.8V, and the maximum operating voltage of the battery is 4.2V.

### Comparative Example 2

This comparative example provides a pouch laminated secondary battery:
The cathode includes the following components with mass fractions: 1.1% SP+0.6% CNT+1.1% PVDF+1.2% Li₅FeO₄+96% NCM811 (LiNi_{0.8}Co_{0.1}Mn_{0.1}O₂), with a V1 voltage of 3.6V and a V2 voltage of 3.9V for Li₅FeO₄; The V3 voltage of NCM811 is 4.2V;
The anode consists of the following components with mass fractions: 85.7% graphite+9.5% SiO+1.1% SP+3% PAA+0.6% SBR+0.1% SWCNT;
After the pouch battery is filled with electrolyte and left to stand, it is subjected to a full 0.6MPa pressure and then initial charging and capacity verification according to the following prescribed process. After that, it is evacuated to complete the battery cell production:
   S1, Charge at a constant rate of 0.05C to 3V;
   S2, Charge at a constant rate of 0.1C to 3.4V;
   S3, Charge at a constant rate of 0.2C to 3.7V;
   S4, Charge at a constant rate of 0.3C to 3.9V, then maintain a constant voltage to a current of 0.05C and rest 5 minutes;
   S5, Discharge at a constant rate of 0.3C to 3.6V and rest 5 minutes;
   S6, Charge at a constant rate of 0.3C to 3.9V, then maintain a constant voltage to a current of 0.05C and rest 5 minutes;
   S7, Discharge at a constant rate of 0.3C to 3.6V and rest 5 minutes;
   S8, Charge at a constant rate of 0.3C to 4.2V and rest 5 minutes;
The minimum operating voltage of the battery is 2.8V, and the maximum operating voltage of the battery is 4.2V.

### Comparative Example 3

### This embodiment provides a pouch laminated secondary battery

The cathode includes the following components with mass fractions: 1.1% SP+0.6% CNT+1.1% PVDF+1.2% Li₅FeO₄ +96% NCM811 (LiNi_{0.8}Co_{0.1}Mn_{0.1}O₂), with a V1 voltage of 3.6V and a V2 voltage of 3.9V for Li₅FeO₄; The V3 voltage of NCM811 is 4.2V.

The anode consists of the following components with mass fractions: 85.7% graphite+9.5% SiO+1.1% SP+3% PAA+0.6% SBR+0.1% SWCNT;
After the pouch battery is filled with electrolyte and left to stand, it is subjected to a full pressure of 0.3MPa and then initial charging and capacity verification according to the following procedures. After that, it is evacuated to complete the battery cell production:
S1, Charge at a constant rate of 0.05C to 3V;
S2, Charge at a constant rate of 0.1C to 3.4V;
S3, Charge at a constant rate of 0.2C to 3.7V;
S4, Charge at a constant rate of 0.3C to 4.2V, then maintain a constant voltage to a current of 0.05C and rest 5 minutes;

The minimum operating voltage of the battery is 2.8V, and the maximum operating voltage of the battery is 4.2V.

### Comparative Example 4

This embodiment provides a pouch laminated secondary battery:
The cathode includes the following components with mass fractions: 1.1% SP+0.6% CNT+1.1% PVDF+1.2% Li₅FeO₄+96% NCM811 (LiNi_{0.8}Co_{0.1}Mn_{0.1}O₂), with a V1 voltage of 3.6V and a V2 voltage of 3.9V for Li₅FeO₄; The maximum operating voltage V3 of NCM811 is 4.2V;
The anode consists of the following components with mass fractions: 85.7% graphite+9.5% SiO+1.1% SP+3% PAA+0.6% SBR+0.1% SWCNT;
After the pouch battery is filled with electrolyte and left to stand, it is subjected to a full pressure of 0.3MPa and then initial charging and capacity verification according to the following procedures. After that, it is evacuated to complete the battery cell production:
   S1, Charge at a constant rate of 0.05C to 3V;
   S2, Charge at a constant rate of 0.1C to 3.4V;
   S3, Charge at a constant rate of 0.2C to 3.7V;
   S4, Charge at a constant rate of 0.3C to 3.9V, then maintain a constant voltage to a current of 0.05C and rest 5 minutes;
   S5, Discharge at a constant rate of 0.3C to 3.6V and rest 5 minutes;
   S6, Charge at a constant rate of 0.3C to 4.2V and rest 5 minutes;
The minimum operating voltage of the battery is 2.8V, and the maximum operating voltage of the battery is 4.2V.

### Comparative Example 5

This embodiment provides a pouch laminated secondary battery:
The cathode includes the following components with mass fractions: 1.1% SP+0.6% CNT+1.1% PVDF+1.2% Li₅FeO₄+96% LiFePO₄, with a V1 voltage of 3.6V and a V2 voltage of 3.9V for Li₅FeO₄; The V3 voltage of Li₅FeO₄ is 3.65V;
The anode includes the following components with mass fractions: 96% graphite+1% SP+1.2% CMC Na+1.8% SBR;
After the pouch battery is filled with electrolyte and left to stand, it is subjected to a full pressure of 0.4MPA and then initial charging and capacity verification according to the following prescribed process. After that, it is evacuated to complete the battery cell production:
   S1, Charge at a constant rate of 0.05C for 60 minutes;
   S2, Charge at a constant rate of 0.1C for 60 minutes;
   S3, Charge at a constant rate of 0.2C for 60 minutes;
   S4, Charge at a constant rate of 0.03C to 4.1V, then maintain a constant voltage to a current of 0.05C and rest 5 minutes;
The minimum operating voltage of the battery is 2.0V, and the maximum operating voltage of the battery is 3.65V.

### Application performance testing:

The batteries produced in Examples 1-7 and Comparative Examples 1-5 were tested according to the following method, and the test results are shown in Table 1:
(1) 45°C cycle life test: Testing at 45°C:
Step 1, discharge at a constant rate of 1C to the lowest operating voltage;
Step 2, rest 5 minutes;
Step 3, charge at a constant rate of 1C to the highest operating voltage, and then maintain a constant voltage until the current is 0.05C;
Step 4, rest 5 minutes;
Step 5: Repeat steps 1 to 4 until the discharge capacity decays to 80% of the initial discharge capacity. Record the number of cycles at this point, which is the cycle life.

(2) Test for lithium deposition during full capacity charging:
Step 1: Charge the battery at a constant rate of 1C to its maximum operating voltage, and then maintain a constant voltage until the current reaches 0.05C;
Step 2, rest 5 minutes;
Step 3, disassemble the battery cell and observe whether lithium precipitates on the anode surface.

**Table 1**

| Embo dimen t | positive electrode lithium supplemen tation additive type | V1/ V | V2/ V | Lithium transition metal oxide types | V3/ V | Batte ry type | Pressur e for initial chargin g and capacit y verific ation of battery cells | Is it followin g the prescribe d initial charging and capacity verificati on process | Does lithiu m preci pitate when fully charg ed with capac ity verifi catio n | 45°C cycle life/cls |
|---|---|---|---|---|---|---|---|---|---|---|
| Exam ple1 | Li₅FeO₄ | 3.6 | 3.9 | NCM811 | 4.2 | pouc h lamin ated | 0.3 MPa | Yes | No | 1290 |
| Exam ple2 | Li₂NiO₂ | 3.5 | 4.0 | LiFePO₄ | 3.65 | squar e | -70 KPa | Yes | No | 3450 |
| Exam ple3 | Li₆CoO₄ | 3.5 | 3.9 | NCM811 | 4.2 | pouc h lamin ated | 0.1 MPa | Yes | No | 1239 |
| Exam ple4 | Li₂O | 2.3 | 3.8 | NCM811 | 4.2 | pouc h lamin ated | 0.3 MPa | Yes | No | 1228 |
| Exam ple5 | Li₃N | 3.8 | 4.1 | NCM523 | 4.35 | pouc h lamin ated | 0.2 MPa | Yes | No | 1312 |
| Exam ple6 | Li₅FeO₄ | 3.6 | 3.9 | LiCoO₂ | 4.4 | pouc h woun d | 0.4 MPa | Yes | No | 1180 |
| Exam ple7 | Li₅FeO₄ | 3.6 | 3.9 | LiFePO₄ | 3.65 | pouc h lamin ated | 0.4 MPa | Yes | No | 3530 |
| Comp arative Exam ple1 | Li₅FeO₄ | 3.6 | 3.9 | NCM811 | 4.2 | pouc h lamin ated | 0.05 MPa | Yes | Yes | 830 |
| Comp arativ e Exam ple2 | Li₅FeO₄ | 3.6 | 3.9 | NCM811 | 4.2 | pouc h lamin ated | 0.6 MPa | Yes | No | 880 |
| Comp arativ e Exam ple3 | Li₅FeO₄ | 3.6 | 3.9 | NCM811 | 4.2 | pouc h lamin ated | 0.3 MPa | No | Yes | 750 |
| Comp arativ e Exam ple4 | Li₅FeO₄ | 3.6 | 3.9 | NCM811 | 4.2 | pouc h lamin ated | 0.3 MPa | No | No | 890 |
| Comp arativ e Exam ple5 | Li₅FeO₄ | 3.6 | 3.9 | LiFePO₄ | 3.65 | pouc h lamin ated | 0.4 MPa | No | Yes | 2190 |

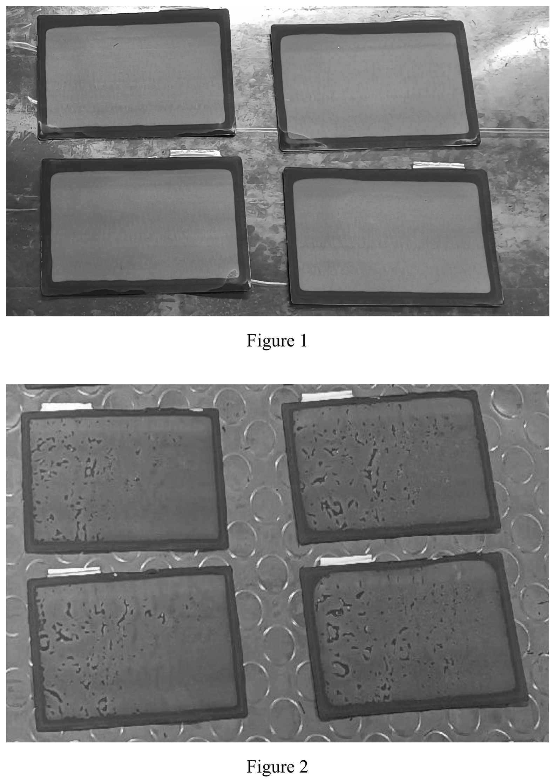

Comparing Example 1 with Comparative Example 1, it can be concluded that the pressure applied during the initial charging and capacity verification of the battery in Comparative Example 1 is too low, resulting in some residual oxygen produced by the delithiation of Li5FeO4 in the electrode, leading to black spots and lithium deposition. The disassembly image of the fully charged electrode in Example 1 is shown in Figure 1, and the disassembly image of the fully charged electrode in Comparative Example 1 is shown in Figure 2.

Comparing Example 1 with Comparative Example 2, it can be concluded that the pressure experienced by the battery in Comparative Example 2 during initial charging and capacity verification is too high, resulting in excessive pressure on the cathode and anode. This can lead to a low porosity of the electrodes, a decrease in the wettability of the electrode electrolyte, and a deterioration in cycling.

Comparing Example 1 with Comparative Example 3, it can be concluded that the initial charging and capacity verification of Comparative Example 3 did not follow the prescribed process. Most of the Li₅FeO₄ was delithiated at high voltage, releasing reactive oxygen species that reduced the stability of the electrolyte. Moreover, the high rate delithiation at high voltage caused the anode to not be able to embed all the lithium ions, resulting in lithium deposition and poor high-temperature cycling performance.

Comparing Example 1 with Comparative Example 4, it can be concluded that the initial charging and capacity verification process of Comparative Example 4 reduces the number of charge and discharge cycles from 2 to 1 from V1 to V2, and Li₅FeO₄ does not fully release lithium ions, resulting in some residual active oxygen damaging the stability of the electrolyte during cycling and deteriorating cycling performance.

Comparing Example 7 with Comparative Example 5, it can be concluded that the initial charging and capacity verification process of Comparative Example 5 is directly charged to 4.1V, and Li₅FeO₄ rapidly releases lithium ions at high voltage, resulting in the anode not being able to embed all lithium ions in time, leading to lithium deposition and deterioration of cycling performance.

The specific embodiments of the present invention have been described above. It should be understood that the present invention is not limited to the specific embodiments described above, and those skilled in the art may make various modifications or alterations within the scope of the claims, which does not affect the essence of the present invention.

## Claims

1. An initial charging and capacity verification method for lithium-ion battery containing positive electrode lithium supplementation additive, **characterized in that** the initial charging and capacity verification method comprises the following steps:
S1. Assemble the anode, electrolyte, and cathode into a lithium-ion battery; The cathode comprises a cathode current collector and a cathode film layer disposed on at least one surface of the cathode current collector, wherein the cathode film layer comprises a cathode active material; The cathode active material includes lithium transition metal oxide and lithium replenishment additive;
S2. Conduct initial charging lithium-ion batteries;
S3. The average voltage for the first extraction of lithium additive from the low percentage range is V₁, the average voltage for the first extraction from the high percentage range is V₂, and the maximum operating voltage for lithium transition metal oxide is V₃;
S4. Determine whether V₃ is less than 4V and divide the capacity accordingly
(1) If V₃ is less than 4V, charge the lithium-ion battery according to the following steps:
① Charge at a constant rate of 0.1-0.4C to 3.7-3.9V, then maintain a constant voltage to a current of 0.01-0.1C and let it rest;
② Charge at a constant rate of 0.1-0.4C to V2±0.1V, then maintain a constant voltage until the current is 0.01-0.1C, and let it rest;
③ Charge at a constant rate of 0.01-0.1C to 4.1 ±0.1V and rest 3-30 minutes; Then the capacity verification process ends;
(2) If V₃ is greater than or equal to 4V, charge and discharge the lithium-ion battery according to the following steps:
① Charge at a constant rate of 0.1-0.4C to V2±0.1V, then maintain a constant voltage until the current is 0.01-0.1C, and let it rest;
② Discharge at a constant rate of 0.1-0.5C to V1 ±0.1V and let it stand;
③ Repeat steps ① and ② for 2-5 cycles of charging and discharging;
④ Charge at a constant rate of 0.1-0.5C to V3±0.1V and let it stand; Then the capacity verification process ends.

2. The initial charging and capacity verification method according to claim 1, **characterized in that** in step S1, the lithium transition metal oxide comprises one or more of LiCoO₂, LiFePO₄, and LiₓNi_{y}M_{1-y}O₂; Among them, 0.9≤x≤1.2, 0.5≤y<1, M includes one or more of Co, Mn, Al, Mg, Ti, Fe, Cr, Mo, and Ca.

3. The initial charging and capacity verification method according to claim 1, **characterized in that** in step S1, the lithium replenishment additive comprises one or more of Li₆CoO₄, Li₂NiO₂, Li₅FeO₄, Li₂O, Li₃N and their respective modified materials.

4. The initial charging and capacity verification method according to claim 1, **characterized in that** the ratio of the mas of the lithium replenishment additive to the mass of the cathode active material is 0.5-15%.

5. The initial charging and capacity verification method according to claim 1, **characterized in that** in step S1, the lithium-ion battery comprises one of a pouch battery, a square battery, and a cylindrical battery;
When the lithium-ion battery is a pouch battery, the initial charging and capacity verification of steps S2-S4 are carried out at a pressure of 0.1-0.4MPa;
When the lithium-ion battery is a square battery or a cylindrical battery, the initial charging and capacity verification of steps S2-S4 are carried out under negative pressure ranging from -65 to -75KPa.

6. The initial charging and capacity verification method according to claim 1, **characterized in that** the specific steps of initial charging in step S2 are:
S2-1. Charge at a constant rate of 0.01-0.2C for 40-80 minutes, with a cut-off voltage of 3V±0.1V. When the charging time reaches 40-80 minutes or the cut-off voltage reaches 3V ±0.1V, jump to the next step;
S2-2. Charge at a constant rate of 0.05-0.3C for 40-80 minutes, with a cut-off voltage of 3.4V±0.1V. When the charging time reaches 40-80 minutes or the cut-off voltage reaches 3.4V±0.1V, jump to the next step;
S2-33. Charge at a constant rate of 0.1-0.5C for 40-80 minutes, with a cut-off voltage of 3.7V±0.1V. If the charging time reaches 40-80 minutes or the cut-off voltage reaches 3.7V±0.1V, jump to step S3.

7. The initial charging and capacity verification method according to claim 1, **characterized in that**, in step S3, the lower limit of the low percentage interval is not less than 5%, and the upper limit is not more than 30%; The lower limit of the high percentage range is not less than 50%, and the upper limit is not more than 90%.

8. The initial charging and capacity verification method according to claim 1, **characterized in that** in step S3, the low percentage range is 5%-30%, and the high percentage range is 50%-90%;
When the lithium replenishment additive is Li₆CoO₄, the average voltage V₁ for the first extraction of 5%-30% capacity per gram is 3.5V, and the average voltage V₂ for the first extraction of 50%-90% capacity per gram is 3.9V;
When Li₂NiO₂ is used as a lithium replenishment additive, the average voltage V₁ for the first extraction of 5%-30% capacity per gram is 3.5V, and the average voltage V₂ for the first extraction of 50%-90% capacity per gram is 4.0V;
When the lithium replenishment additive is Li₅FeO₄, the average voltage V₁ for the first extraction of 5%-30% capacity per gram is 3.6V, and the average voltage V₂ for the first extraction of 50%-90% capacity per gram is 3.9V;
When the lithium replenishment additive is Li₂O, the average voltage V₁ for the first extraction of 5%-30% capacity per gram is 2.3V, and the average voltage V₂ for the first extraction of 50%-90% capacity per gram is 3.8V;
When the lithium replenishment additive is Li₃N, the average voltage V₁ for the first extraction of 5%-30% capacity per gram is 3.8V, and the average voltage V₂ for the first extraction of 50%-90% capacity per gram is 4.1V.

9. The initial charging and capacity verification method according to claim 1, **characterized in that** in step S4, when the transition metal oxide is LiFePO₄, V₃ is less than 4V; When the transition metal oxide is LiCoO₂ and/or LiₓNi_{y}M_{1-y}O₂, V₃ is greater than or equal to 4V, where 0.9≤x≤ 1.2, 0.5≤y<1, and M includes one or more of Co, Mn, Al, Mg, Ti, Fe, Cr, Mo, and Ca.

10. The initial charging and capacity verification method according to claim 1, **characterized in that** in step S1, the cathode current collector comprises one of aluminum foil or carbon coated aluminum foil.
